# EUROPEAN PATENT SPECIFICATION

(11) **EP 3 309 898 B1**
(45) Date of publication and mention of the grant of the patent: **12.06.2019**
(21) Application number: 16194006.9
(22) Date of filing: 14.10.2016
(51) Int. Cl.: H01Q 1/00

(54) **ANTENNA MODULE FOR MILLIMETER-WAVE COMMUNICATION SYSTEMS AND TRANSCEIVER ARRANGEMENT**
ANTENNEN-MODUL FÜR MILLIMETERWELLEN-KOMMUNIKATIONS-SYSTEME UNS SENDER-EMPFÄNGER ANORDNUNG
MODULE ANTENNE POUR SYSTÈMES DE COMMUNICATION PAR ONDES MILLIMÉTRIQUES ET DISPOSITION D'ÉMETTEUR-RÉCEPTEUR

(43) Date of publication of application: 18.04.2018
(73) Proprietor: TE Connectivity Nederland B.V., 5222 AR 's Hertogenbosch (NL)
(72) Inventor: ROUSSTIA, Mohadig Widha, 5612 Eindhoven / DZ (NL); SINAGA, Saoer Maniur, 3544 Utrecht (NL); PANIS, Martinus J, 5275 Den Dungen / LE (NL); HORNUNG, Rainer Oliver, 5223 's-Hertogenbosch / GM (NL)
(74) Representative: Grünecker Patent- und Rechtsanwälte PartG mbB

(56) References cited:
- US-A1- 2010 156 726

## Description

The invention relates to an antenna module, in particular for millimeter-wave communication systems. The invention further relates to a transceiver arrangement.

In high-bandwidth and low-latency communication systems, for example in multi-gigabit communication systems, a full-duplex transmission in which transmitter and receiver are used simultaneously is usually preferred over a half-duplex transmission in which either the transmitter or the receiver is used. However, a half-duplex transmission, i.e. a time-division duplex technique often has to be used in order to clearly separate incoming and outgoing signals.

From US 2010/0156726A1, an antenna is known which is used for GSM bands. The antenna is provided with branches that are arranged on two opposing sides of a plastic carrier.

It is therefore an object of the invention to provide an antenna module and a transceiver arrangement which are capable of a full-duplex transmission, especially for millimeter-wave communication at high bandwidth with low latency.

The invention is defined in the claims. According to the invention, this object is achieved by an antenna module, the antenna module comprising at least one carrier structure, at least one antenna arrangement for transmitting and receiving electromagnetic radiation, at least one transmitter connection element and at least one receiver connection element for electrically connecting the module to a transmitter and a receiver respectively, wherein the at least one transmitter connection element is arranged in a transmitter section, the at least one receiver connection element is arranged in a receiver section and the at least one antenna arrangement is arranged in an antenna section, wherein the antenna section is arranged basically between the at least one transmitter section and the at least one receiver section, and wherein the at least one carrier structure has an overall U-shape with the at least one antenna arrangement being located on a base of the U-shape.

For the transceiver arrangement, this object is achieved by a transceiver arrangement comprising at least one mounting structure, at least one transmitter circuit and at least one receiver circuit, wherein the transceiver arrangement further comprises at least one antenna module according to the invention, and wherein the at least one transmitter connection element and the at least one receiver connection element are electrically connected to the transmitter and the receiver, respectively.

In other words, the transmitter section, the antenna section and the receiver section are arranged along a line, wherein the sections are arranged in the following order: transmitter section, antenna section, receiver section. The arrangement of the sections according to the invention may result in distances between the objects on the carrier structure, wherein a distance between the at least one transmitter connection element and the at least one receiver connection element is always larger than a distance between the at least one transmitter connection element and the at least one antenna arrangement and/or between the at least one receiver connection element and the at least one antenna arrangement.

The solution, according to the invention, separates the at least one transmitter connection element from the at least one receiver connection element by placing the at least one antenna arrangement in between them. This separation reduces cross-talking between the connection elements and between a transmitter and a receiver if these are connected to the connection elements. The antenna module and the transceiver arrangement according to the invention can therefore be used in full-duplex mode. Due to the U-shape, a compact antenna module can be achieved.

In the following, further improvements of the invention are described. The additional improvements may be combined independently of each other, depending on whether a particular advantage of a particular improvement is needed in a specific application.

According to a first advantageous improvement, the at least one carrier structure may be a flexible printed circuit board substrate. This allows easily adapting at least the carrier structure to different geometrical requirements. Preferably, the antenna module is a flexible printed circuit board such that the whole antenna module can easily be altered in shape and adapted to different requirements. In that case, the antenna module is preferably provided with flexible conductors for electrical connections between the elements of the module, where required. Preferably, the at least one carrier structure is made from a material which provides low loss of electromagnetic waves travelling along the antenna module. A preferred material for the at least one carrier structure is liquid crystal polymer (LCP).

According to another advantageous improvement, the antenna module may have an overall strip-like shape. In particular, the at least one transmitter section and the at least one receiver section can be arranged at the two opposing ends of the strip-like shaped module. The aforementioned line on which the sections are arranged, is preferably parallel to the longitudinal direction of the strip-like shape.

The module may be provided with further, in particular with passive, electrical components which are connected to the at least one antenna arrangement and/or to at least one of the transmitter connection elements and the at least one receiver connection element. This enables a high integration of components and a compact structure. Further, lengths of conductive paths between the at least one electrical component and other objects of the antenna module can be short.

In particular, the module may be provided with at least one polarizer circuit which is electrically connected at least to the antenna arrangement. The at least one polarizer circuit is preferably electrically connected to the at least one antenna arrangement such that it may directly influence the electromagnetic radiation which is radiated from the antenna.

In a preferred embodiment of an antenna module comprising at least one polarizer circuit, the at least one polarizer circuit is adapted for providing circular polarized electromagnetic radiation. In this case, the at least one antenna module radiates circular polarized electromagnetic waves which allows a rotational freedom of the antenna module relative to a transceiver arrangement which is adapted to and arranged such that it may communicate with the antenna module according to the invention.

In order to further increase the integration of components on the antenna module and to keep the lengths of conductive paths short, the module may further comprise at least one filter circuit which is electrically connected to the at least one transmitter connection element and/or to the at least one receiver connection element. Such filter circuit may for example comprise a band pass filter, a low pass filter, a high pass filter and/or any other required filter or any combination of these. Preferably, the at least one filter circuit is directly electrically connected to the at least one polarizer circuit.

A U-shape can easily be created by using the aforementioned flexible printed circuit board substrate as a carrier structure. The U-shape may further be helpful in easily connecting a transmitter and/or a receiver to the respective connection elements on the antenna module. In order to avoid obstructing electromagnetic radiation from the at least one antenna arrangement, the at least one antenna arrangement is preferably located on the outside of the base of the U-shape. Legs of the U-shape are basically parallel to and spaced apart from each other for keeping a compact structure and allowing a good separation between components on the legs.

In order to prevent cross-talking between the at least one receiver connection element and the at least one transmitter connection element, the at least one transmitter connection element and the at least one receiver connection element may be arranged on a free end of a different leg each. This arrangement may also reduce or eliminate cross-talking between a transmitter and a receiver when the antenna module is connected to these.

The at least one further, in particular passive, electrical component is preferably basically located on one leg. This may help in order to keep the base of the U-shape compact and therefore allow an overall compact structure. In particular, the base of the U-shape may basically provide the antenna section of the antenna module.

In order to easily electrically connect the at least one filter circuit to the at least one transmitter connection element and in order to easily connect the at least one polarizer circuit to the at least one receiver connection element, the module may preferably be provided with at least one polarizer circuit basically located on one leg and at least one filter circuit basically located on the other leg.

The transceiver arrangement according to the invention may further be improved in that the at least one antenna module is bent around a mounting structure. The antenna module may thereby easily be adapted to the shape and size of the mounting structure. In this case, the antenna module is preferably flexible, for example by comprising a carrier structure which is made from a flexible printed circuit board substrate.

In order to keep the transceiver arrangement compact, the at least one antenna module may at least partially envelop the at least one mounting structure.

The at least one mounting structure may comprise at least one fastening member for fastening at least one transmission element, in particular a dielectric fiber or a dielectric antenna on the at least one antenna arrangement. The at least one fastening member may especially be formed in order to fasten at least one transmission element by latching onto the mounting structure. The at least one fastening member may for example have the shape of a pin, a latching hook or a recess for a complementary shaped latching or fastening element.

In the following, the invention and its improvements are described in greater details using exemplary embodiments and with reference to the drawings. As described above, the various features shown in the embodiments may be used independently of each other in specific applications.

In the following figures, elements having the same function and/or the same structure will be referenced by the same reference signs.

In the drawings:
- Fig. 1: shows a top view of a preferred embodiment of an antenna module according to the invention;
- Fig. 2: shows an embodiment of a transceiver arrangement according to the invention which is provided with an antenna module as shown in Fig.1;
- Fig. 3: shows an exemplary application of two transceiver arrangements according to the invention in a communication system; and
- Fig. 4: shows another exemplary application of two transceiver arrangements according to the invention in a communication system; and
- Fig. 5: shows another exemplary embodiment of a transceiver arrangement according to the invention.

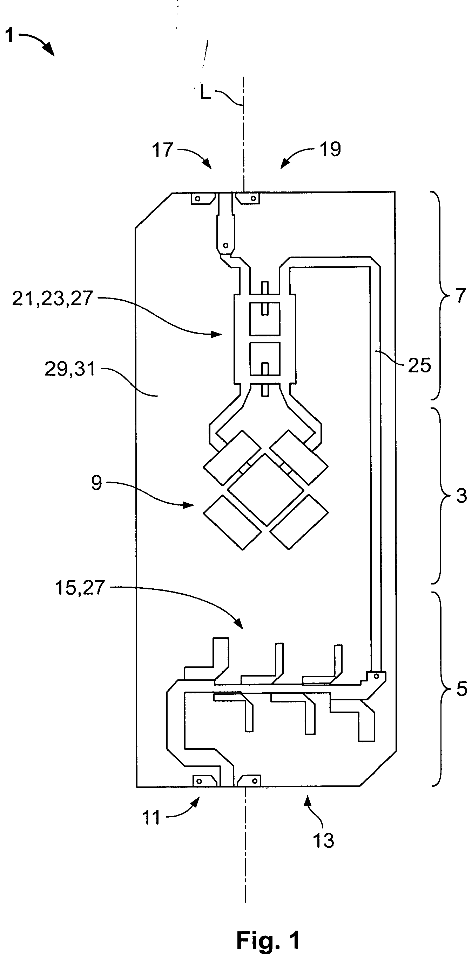

In the following, a preferred embodiment of an antenna module 1 is described with respect to Fig. 1. The antenna module 1 has an overall strip-like shape and basically extends parallel to a longitudinal direction L of the strip-like shape.

The antenna module 1 can be separated into three sections, an antenna section 3, a receiver section 5 and a transmitter section 7. The antenna section 3 is arranged between the receiver section 5 and the transmitter section 7. In other words, along the longitudinal direction L, the antenna section 3 follows the receiver section 5 and the transmitter section 7 follows the antenna section 3.

The antenna section 3 is provided with an antenna arrangement 9, which is preferably arranged in the center of the antenna module 1. The antenna arrangement 9 is intended to emit and receive electromagnetic radiation.

The receiver section 5 is provided with the receiver connection element 11 for connecting the antenna module 1 to a receiver (not shown). Preferably, the receiver connection element 11 is arranged at an end 13 of the module 1 in the longitudinal direction L.

The receiver section 5 is further provided with a filter circuit 15, which is electrically connected to the receiver connection element 11.

The transmitter section 7 is provided with the transmitter connection element 17 for connecting the antenna module 1 to a transmitter (not shown). Preferably, the transmitter connection element 17 is arranged at an end 19 of the module 1 in the longitudinal direction L which lies opposite to the end 13 where the receiver connection element 11 is located.

The transmitter section 7 is further provided with a polarizer circuit 21 which is preferably formed as a circular polarizer 23 for providing circular polarized electromagnetic radiation which can be radiated from the antenna arrangement 9. The polarizer circuit 21 is preferably directly electrically connected to the antenna arrangement 9 and to the transmitter connection element 17. Further, the polarizer circuit 21 is electrically connected to the filter circuit 15. In other words, the filter circuit 15 is connected to the antenna arrangement 9 via the polarizer circuit 21.

For electrically connecting the polarizer circuit 21 with the filter circuit 15, a conductor extends from the polarizer circuit 21 to the filter circuit 15, crossing the antenna section 3. The conductor 25 extends parallel to the longitudinal direction L and is spaced apart from the antenna arrangement 9 in a direction perpendicular to the longitudinal direction L.

Preferably, the filter circuit 15 and the polarizer circuit 21 are passive electrical components 27.

The antenna module 1 comprises a carrier structure 29, which is preferably a substrate for a printed circuit board. The carrier structure 29 basically defines the overall shape of the antenna module 1 and therefore has an overall strip-like shape extending basically parallel to the longitudinal direction L.

Preferably, the components as described above, such as the antenna arrangement 9, the polarizer circuit 21, the filter circuit 15 and the connector elements 11 and 17 are arranged on the carrier structure 29 and form a circuit board.

The carrier structure 29 is preferably flexible. In particular, the carrier structure 29 is preferably made from a flexible printed circuit board substrate 31. Consequently, at least the connectors connecting the components of the antenna module are preferably flexible conductors. It is also possible that at least one of the antenna arrangement 9, the polarizer circuit 21 and the filter circuit 15 are at least partially made from flexible material, such as flexible conductors.

A preferred material for the carrier structure 29 is liquid crystal polymer (LCP).

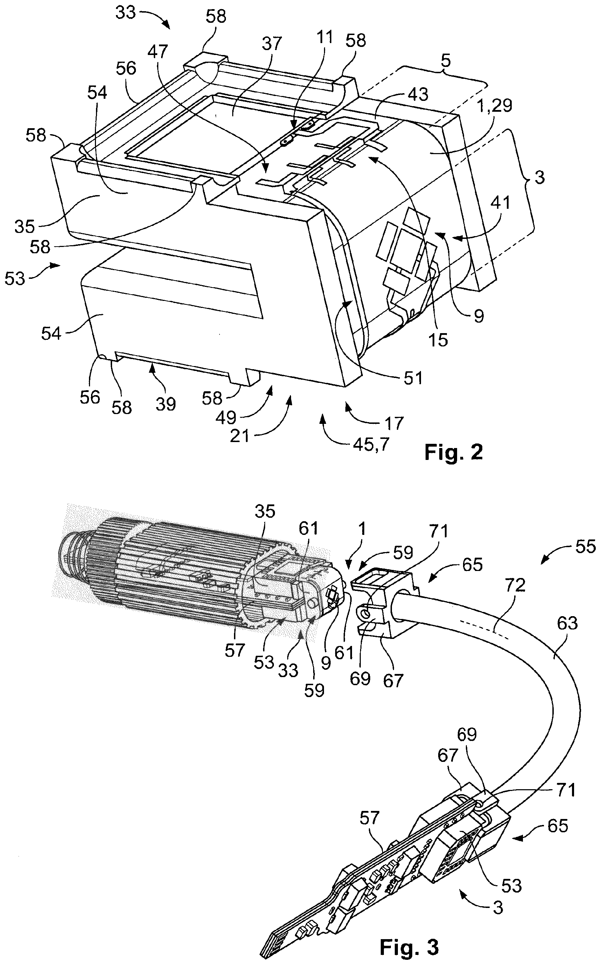

Fig. 2 shows an embodiment of a transceiver arrangement 33 according to the invention. The transceiver arrangement 33 comprises a mounting structure 35 which preferably carries a transmitter circuit 39 and a receiver circuit 37. Preferably, the transmitter circuit 39 and the receiver circuit 37 are arranged on opposite sides of the mounting structure 35 in order to prevent cross-talking between the circuits.

Alternatively, the transceiver arrangement is not provided with a transceiver circuit and a receiver circuit directly mounted on the mounting structure 35, but elsewhere. In this case, the mounting structure 35 carries connection elements which are adapted to establish a connection to said circuits.

The transceiver arrangement 33 is provided with an antenna module 1 according to the invention. In the preferred embodiment as shown in Fig. 2, the transmitter connection element 17 of the antenna module 1 is electrically connected to the transmitter circuit 39 and the receiver connection element 11 is electrically connected to the receiver circuit 37.

The antenna module 1 has an overall U-shape, wherein the antenna arrangement 9 is located on a base 41 of the U-shape. The base 41 of the U-shape is basically formed by the antenna section 3 of the antenna module 1. Legs 43 and 45 of the U-shape extend from the base 41 and are basically parallel to and spaced apart from each other.

The leg 43 is basically formed by the receiver section 5 and carries the receiver connection element 11 and the filter circuit 15. The leg 45 is basically formed by the transmitter section 7 and carries the transmitter connection element 17 and the polarizer circuit 21. Thereby, the connection elements 11 and 17 are located on free ends 47 and 49 of the legs 43 and 45.

The U-shape of the antenna module 1 may be achieved by bending a flexible antenna module 1 around the mounting structure 35. However, the antenna module 1 may also be bent in a production step prior to attaching the antenna module 1 on the mounting structure 35.

Alternatively, the antenna module 1 may have a carrier structure 29 made from a solid material. In order to achieve a U-shape, or another required shape, the carrier structure 29 may then be produced in said shape, for example by injection molding.

The mounting structure 35 is partially enveloped by the U-shaped antenna module 1. Consequently, the antenna module 1 is arranged on an outer side 51 of the mounting structure 35. This arrangement allows an undisturbed radiation from the antenna arrangement 9.

On a side facing away from the antenna arrangement 9, the transceiver arrangement 33 comprises a connection area 53. The connection area 53 extends slit-like into the mounting structure 35, wherein a plane of the slit extends between the transmitter circuit 39 and the receiver circuit 37 and basically parallel with the legs 43 and 45 of the antenna module 1. The connection area 53 can be used for receiving a printed circuit board.The transceiver arrangement 33 may comprise electrical contacts in the connection area 53 (not shown) which are adapted for electrically contacting complementary contacts on a printed circuit board when such board is received in the connection area 53.

Preferably, the receiver circuit 37 and the transmitter circuit 39 are electrically connected to a printed circuit board by electric traces which can be arranged on side walls 54 of the mounting structure 35.

Said side walls 54 and rear walls 56 of the mounting structure 35 may project from the remaining mounting structure 35 such that the receiver circuit 37 and the transmitter circuit 39 are each at least partially surrounded by the walls 54 and 56. The walls 54 and 56 preferably extend or project in directions perpendicular to the slit-like connection area 53. The walls 54 and 56 may prevent resin (not shown) which may be applied on electrical contacts of the circuits 37 and 39 from flowing off the area in which said circuits 37 and 39 are arranged.

The walls 54 and 56 are preferably provided with support members 58 which may project further from the remaining mounting structure 35 than the walls 54 and 56. The support members 58 are preferably arranged at interconnections between the walls 54 and 56 and at the ends of the side walls 54 which are located closer to the antenna module 1. The support members 58 may be used for supporting and positioning heatsink structures on the circuits 37 and 39.

Fig. 3 shows an example of a communication system 55. The communication system 55 comprises two transceiver arrangements 33 according to the invention, each with a mounted antenna module 1. Each of the transceiver arrangements 33 is electrically connected to a printed circuit board 57, which is received in the connection area 53.

The transceiver arrangements 33 as shown in Fig. 3 are basically identical to the one as described with respect to Fig. 2, with one exception. The transceiver arrangements 33 of the second embodiment are provided with two fastening members 59 each. The fastening members 59 are shaped as pins and extend from side faces 61 of the mounting structure 35. Said side faces 61 are arranged perpendicular to the legs 43 and 45 of the antenna module 1. The fastening members 59 can be used for fastening a transmission element on the antenna arrangement 9.

Just by way of example, Fig. 3 shows a polymer fiber 63 for interconnecting the two transceiver arrangements 33. Each end 65 of the fiber 63 is provided with a socket 67 adapted for receiving a transceiver arrangement 33. In a mated state, a transceiver arrangement 33 is received in the socket 67 such that the fiber 63 is in contact with or in close vicinity to the antenna arrangement 9. Thereby, electromagnetic radiation from the antenna arrangement 9 can couple into the fiber 63 and electromagnetic radiation can couple from the fiber 63 into an antenna arrangement 9.

The sockets 67 are provided with complementary fastening members 69 which comprise openings 71. The openings 71 are shaped complementary to the pin like fastening members 59 of the transceiver arrangements 33 such that the fastening members 59 can be received in the openings 71 in order to establish a positive fit between the transceiver arrangements 33 and the sockets 67.

Since the antenna module 1 is provided with a circular polarizer 23, the communication system 55 has the advantage of a rotational freedom. In other words, the orientation of the antenna arrangements 9 with respect to a length direction 72 of the fiber 63 does not influence the quality of the transmission between the two transceiver arrangements 33. Both transceiver arrangements 33 could basically be rotated around the direction 72 without negatively influencing the transmission.

Alternatively to the complementary fastening members 69, the sockets 67 may also be connected to a transceiver arrangement 33 by other means or methods. For example, a socket 67 may be glued to a transceiver arrangement 33, in particular glued to the mounting structure 35.

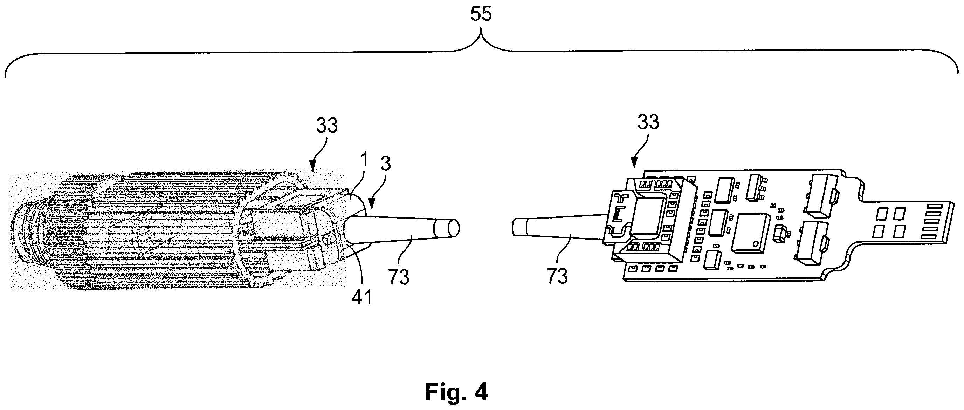

Another application of the transceiver arrangement 33 and the antenna module 1 according to the invention is shown in Fig. 4. For the sake of brevity, only the differences to the previously described embodiments are mentioned.

Instead of a connection using a fiber 63 as described with respect to Fig. 3, the communication system 55 as shown in Fig.4 is capable of using wireless transmission.

Therefore, each transceiver arrangement 33 is provided with an antenna 73. The antennas 73 are preferably made from dielectric material. The antennas 73 are arranged on the antenna section 3 of the antenna module 1 such that the antennas 73 basically extend perpendicular to the base 41 of the U-shape antenna module 1.

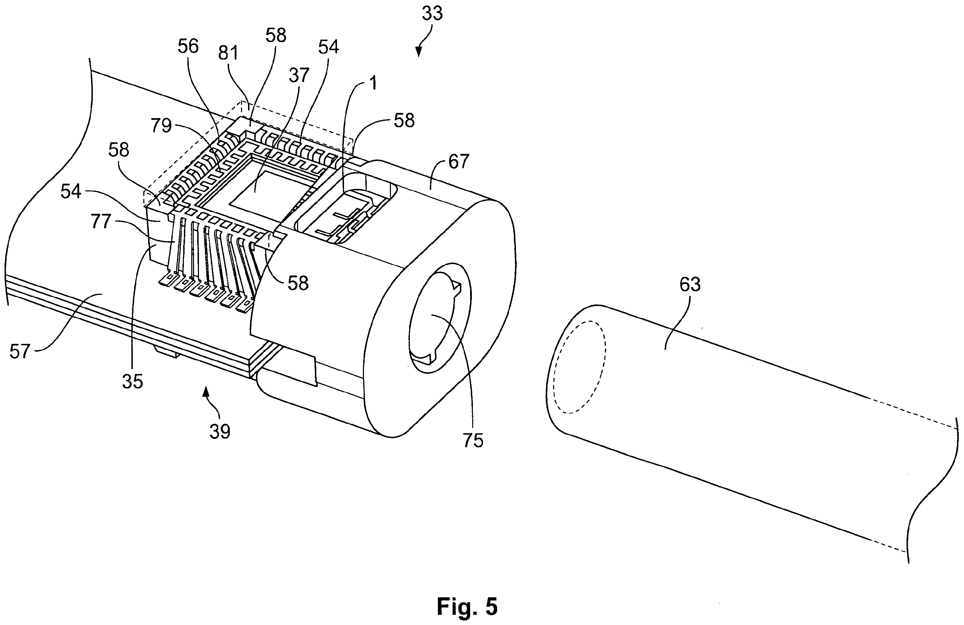

Fig. 5 shows another exemplary embodiment of the transceiver arrangement 33 according to the invention. The transceiver arrangement 33 is connected to a printed circuit board 57 and provided with a cap-like socket 67. The socket 67 may be mounted on the transceiver arrangement 33, i.e. on the mounting structure 35 in a non-removable manner. In particular, the socket 67 may be affixed to the mounting structure 35 by gluing.

The socket 67 is provided with an interface member 75 which can be in direct contact with the antenna arrangement 9 of the antenna module 1. The interface member 75 can be brought into contact with a fiber 63 in order to allow the transmission of electromagnetic radiation between the antenna arrangement 9 and the fiber 63. The fiber 63 may be mounted to the socket 67, in particular to the interface member 75, in a manner which provides a solid structure and low loss connection to the antenna arrangement 9.

Preferably, the fiber 63 is connected to the socket 67 in a way that allows a replacement of the fiber 63 without damaging the socket 67 and/or the transceiver arrangement 33. For example, the fiber 63 may be connected to the socket 67 by a heat shrink tube or by other appropriate means which allow a later replacement of the fiber 63.

Conductor traces 77 are arranged on the outer side 51 of the mounting structure 35 in order to electrically connect the receiver circuit 37 to the printed circuit board 57. It should be noted that the side of the transceiver arrangement 33, which is provided with the transmitter circuit 39 is preferably connected in an equivalent manner.

The conductor traces 77 may be soldered to elements on the printed circuit board 57 and thereby connected to further traces or other conductors (not shown).

Ends 79 of the conductor traces 77 which are arranged in the close vicinity of the receiver circuit 37 may be electrically connected to the receiver circuit 37 by bond wires (not shown). After connecting the circuit 37 to the conductor traces 77, at least the region of the ends 79 may be provided with non-conductive resin in order to protect the contacts between the ends 79 and the bond wires. The resin may also be deposited at least partially on the receiver circuit 37 in order to protect the opposite ends of the bond wires. The side walls 54 and the rear wall 56 prevent resin from flowing off the mounting structure 35.

A heatsink structure 81 is indicated by the dashed line. The heatsink structure 81 can be arranged on and positioned by the support members 58.

As already mentioned, the opposite side of the transceiver arrangement 33, where the transmitter circuit 39 is located, can be arranged accordingly and is preferably provided with similar features as described above.

## Claims

1. Antenna module (1) adapted for millimeter-wave communication systems (55), the antenna module (1) comprising at least one carrier structure (29), at least one antenna arrangement (9) for transmitting and receiving electromagnetic radiation, at least one transmitter connection element (17) and at least one receiver connection element (11) for electrically connecting the antenna module (1) to a transmitter circuit (39) and a receiver circuit (37), respectively, wherein the at least one transmitter connection element (17) is arranged in a transmitter section (7), the at least one receiver connection element (11) is arranged in a receiver section (5) and the at least one antenna arrangement (9) is arranged in an antenna section (3), and wherein the antenna section (3) is arranged basically between the at least one receiver section (5) and the at least one transmitter section (7) **characterized in that** the at least one carrier structure (29) has an overall U-shape with the at least one antenna arrangement (9) being located on a base (41) of the U-shape.

2. Antenna module (1) according to claim 1, wherein the at least one carrier structure (29) is a flexible printed circuit board substrate (31).

3. Antenna module (1) according to claim 1 or 2, wherein the module (1) is provided with further electrical components (15, 17, 27) which are connected to the at least one antenna arrangement (9) and/or to at least one of the transmitter connection element (17) and the at least one receiver connection element (11).

4. Antenna module (1) according to claim 3, wherein the module (1) is provided with at least one polarizer circuit (21) which is electrically connected at least to the antenna arrangement (9).

5. Antenna module (1) according to claim 4, wherein the at least one polarizer circuit (21) is adapted for providing circular polarized electromagnetic radiation.

6. Antenna module (1) according to any of claims 3 to 5, wherein the module (1) further comprises at least one filter circuit (15) which is electrically connected to the at least one transmitter connection element (17) and/or to the at least one receiver connection element (11).

7. Antenna module (1) according to any of claims 1 to 6, wherein the at least one antenna arrangement (9) is located on an outside of the base (41) of the U-shape.

8. Antenna module (1) according to any of claims 1 to 7, wherein legs (43, 45) of the U-shape are basically parallel to and spaced apart from each other.

9. Antenna module (1) according to any of claims 1 to 8, wherein the at least one receiver connection element (11) and the at least one transmitter connection element (17) are arranged on a free end (47, 49) of a different leg (43, 45) of the U-shape each.

10. Antenna module (1) according to any of claims 1 to 9, wherein at least one further electrical component (15, 21, 27) is basically located on a leg (43, 45) of the U-shape.

11. Antenna module (1) according to claim 10, wherein the module (1) is provided with at least one polarizer circuit (21) basically located on one leg (43, 45) of the U-shape and at least one filter circuit (15) basically located on the other leg (43, 45).

12. Transceiver arrangement (33) comprising at least one mounting structure (35), at least one transmitter circuit (39) and at least one receiver circuit (37), wherein the transceiver arrangement (33) further comprises at least one antenna module (1) according to any of claims 1 to 11, and wherein the at least one transmitter connection element (17) and the at least one receiver connection element (11) are electrically connected to the transmitter circuit (39) and the receiver circuit (37), respectively.

13. Transceiver arrangement (33) according to claim 12, wherein the at least one antenna module (1) is bent around mounting structure (35).

14. Transceiver arrangement (33) according to claim 12 or 13, wherein the at least one antenna module (1) at least partially envelops the at least one mounting structure (35).

15. Transceiver arrangement (33) according to any of claims 12 to 14, wherein the at least one mounting structure (35) comprises at least one fastening member (59) for fastening at least one transmission element (63, 73) on the at least one antenna arrangement (9).

## Patentansprüche

1. Antennen-Modul (1), das für Millimeterwellen-Kommunikationssysteme (55) eingerichtet ist, wobei das Antennen-Modul (1) wenigstens eine Träger-Struktur (29), wenigstens eine Antennen-Anordnung (9) zum Senden und Empfangen elektromagnetischer Strahlung, wenigstens ein Sender-Verbindungselement (17) sowie wenigstens ein Empfänger-Verbindungselement (11) zum elektrischen Verbinden des Antennen-Moduls (1) mit einer Sender-Schaltung (39) bzw. einer Empfänger-Schaltung (37) umfasst, wobei das wenigstens eine Sender-Verbindungselement (17) in einem Sender-Teilabschnitt (7) angeordnet ist, dass wenigstens eine Empfänger-Verbindungselement (11) in einem Empfänger-Teilabschnitt (5) angeordnet ist, und die wenigstens eine Antennen-Anordnung (9) in einem Antennen-Teilabschnitt (3) angeordnet ist und der Antennen-Teilabschnitt (3) im Wesentlichen zwischen dem wenigstens einen Empfänger-Teilabschnitt (5) und dem wenigstens einen Sender-Teilabschnitt (7) angeordnet ist, **dadurch gekennzeichnet, dass** die wenigstens eine Träger-Struktur (29) als Ganzes eine U-Form hat und sich die wenigstens eine Antennen-Anordnung (9) an einem unteren Ende (41) der U-Form befindet.

2. Antennen-Modul (1) nach Anspruch 1, wobei die wenigstens eine Träger-Struktur (29) ein Substrat (31) einer flexiblen Leiterplatte ist.

3. Antennen-Modul (1) nach Anspruch 1 oder 2, wobei das Modul (1) mit weiteren elektrischen Komponenten (15, 17, 27) versehen ist, die mit der wenigstens einen Antennen-Anordnung (9) und/oder mit dem Sender-Verbindungselement (17) oder/und dem wenigstens einen Empfänger-Verbindungselement (11) verbunden sind.

4. Antennen-Modul (1) nach Anspruch 3, wobei das Modul (1) mit wenigstens einer Polarisator-Schaltung (21) versehen ist, die elektrisch mit der wenigstens einen Antennen-Anordnung (9) verbunden ist.

5. Antennen-Modul (1) nach Anspruch 4, wobei die wenigstens eine Polarisator-Schaltung (21) zum Erzeugen zirkular polarisierter elektromagnetischer Strahlung eingerichtet ist.

6. Antennen-Modul (1) nach einem der Ansprüche 3 bis 5, wobei das Modul (1) des Weiteren wenigstens eine Filter-Schaltung (15) umfasst, die elektrisch mit dem wenigstens einen Sender-Verbindungselement (17) und/oder dem wenigstens einen Empfänger-Verbindungselement (11) verbunden ist.

7. Antennen-Modul (1) nach einem der Ansprüche 1 bis 6, wobei sich die wenigstens eine Antennen-Anordnung (9) an einer Außenseite des Unterteils (41) der U-Form befindet.

8. Antennen-Modul (1) nach einem der Ansprüche 1 bis 7, wobei Schenkel (43, 45) der U-Form im Wesentlichen parallel zueinander und voneinander beabstandet sind.

9. Antennen-Modul (1) nach einem der Ansprüche 1 bis 8, wobei das wenigstens eine Empfänger-Verbindungselement (11) und das wenigstens eine Sender-Verbindungselement (17) an einem freien Ende (47, 49) eines jeweils anderen Schenkels (43, 45) der U-Form angeordnet sind.

10. Antennen-Modul (1) nach einem der Ansprüche 1 bis 9, wobei sich wenigstens eine weitere elektrische Komponente (15, 21, 27) im Wesentlichen an einem Schenkel (43, 45) der U-Form befindet.

11. Antennen-Modul (1) nach Anspruch 10, wobei das Modul (1) mit wenigstens einer Polarisator-Schaltung (21), die sich im Wesentlichen an einem Schenkel (43, 45) der U-Form befindet, und wenigstens einer Filter-Schaltung (15) versehen ist, die sich im Wesentlichen an dem anderen Schenkel (43, 45) befindet.

12. Sendeempfänger-Anordnung (33), die wenigstens eine Anbringungs-Struktur (35), wenigstens eine Sender-Schaltung (39) und wenigstens eine Empfänger-Schaltung (37) umfasst, wobei die Sendeempfänger-Anordnung (33) des Weiteren wenigstens ein Antennen-Modul (1) nach einem der Ansprüche 1 bis 11 umfasst und das wenigstens eine Sender-Verbindungselement (17) und das wenigstens eine Empfänger-Verbindungselement (11) elektrisch mit der Sender-Schaltung (39) bzw. der Empfänger-Schaltung (37) verbunden sind.

13. Sendeempfänger-Anordnung (33) nach Anspruch 12, wobei das wenigstens eine Antennen-Modul (1) um die Anbringungs-Struktur (35) herum gebogen ist.

14. Sendeempfänger-Anordnung (33) nach Anspruch 12 oder 13, wobei das wenigstens eine Antennen-Modul (1) die wenigstens eine Anbringungs-Struktur (35) wenigstens teilweise umschließt.

15. Sendeempfänger-Anordnung (33) nach einem der Ansprüche 12 bis 14, wobei die wenigstens eine Anbringungs-Struktur (35) wenigstens ein Befestigungs-Teil (59) zum Befestigen wenigstens eines Sende-Elementes (63, 73) an der wenigstens einen Antennen-Anordnung (9) umfasst.

## Revendications

1. Module antenne (1) conçu pour les systèmes de communication à ondes millimétriques (55), le module antenne (1) comprenant au moins une structure porteuse (29), au moins un dispositif d'antenne (9) conçu pour émettre et recevoir un rayonnement électromagnétique, au moins un élément de connexion émetteur (17) et au moins un élément de connexion récepteur (11) pour connecter électriquement le module antenne (1) à un circuit émetteur (39) et à un circuit récepteur (37), respectivement, dans lequel ledit au moins un élément de connexion émetteur (17) est agencé dans une section émetteur (7), le au moins un élément de connexion récepteur (11) est agencé dans une section récepteur (5) et ledit au moins un dispositif d'antenne (9) est agencé dans une section antenne (3), et dans lequel la section d'antenne (3) est agencée essentiellement entre ladite au moins une section récepteur (5) et ladite au moins une section émetteur (7), **caractérisé en ce que** ladite au moins une structure porteuse (29) est globalement en forme de U avec au moins un agencement d'antenne (9) situé sur une base (41) en forme de U.

2. Module antenne (1) selon la revendication 1, dans lequel ladite au moins une structure porteuse (29) est un substrat de carte de circuit imprimé flexible (31).

3. Module antenne (1) selon les revendications 1 ou 2, dans lequel le module (1) est pourvu d'autres composants électriques (15, 17, 27) connectés audit au moins un dispositif d'antenne (9) et/ou à audit au moins l'un de l'élément de connexion émetteur (17) et dudit au moins un élément de connexion récepteur (11).

4. Module antenne (1) selon la revendication 3, dans lequel le module (1) est pourvu d'au moins un circuit polariseur (21) qui est connecté électriquement au moins au dispositif d'antenne (9).

5. Module antenne (1) selon la revendication 4, dans lequel ledit au moins un circuit polariseur (21) est conçu pour fournir un rayonnement électromagnétique polarisé circulaire.

6. Module antenne (1) selon l'une quelconque des revendications 3 à 5, dans lequel le module (1) comprend en outre au moins un circuit de filtrage (15) connecté électriquement audit au moins un élément de connexion émetteur (17) et/ou à au moins un élément de connexion récepteur (11).

7. Module antenne (1) selon l'une quelconque des revendications 1 à 6, dans lequel ledit au moins un dispositif d'antenne (9) est situé à l'extérieur de la base (41) en forme de U.

8. Module antenne (1) selon l'une quelconque des revendications 1 à 7, dans lequel des branches (43, 45) de la forme en U sont fondamentalement parallèles et espacés les uns des autres.

9. Module antenne (1) selon l'une quelconque des revendications 1 à 8, dans lequel ledit au moins un élément de connexion récepteur (11) et ledit au moins un élément de connexion émetteur (17) sont chacun disposés sur une extrémité libre (47, 49) d'une branche différente (43, 45) de la forme en U.

10. Module antenne (1) selon l'une quelconque des revendications 1 à 9, dans lequel au moins un autre composant électrique (15, 21, 27) est essentiellement situé sur une branche (43, 45) de la forme en U.

11. Module antenne (1) selon la revendication 10, dans lequel le module (1) est pourvu d'au moins un circuit polariseur (21) situé essentiellement sur une branche (43, 45) en forme de U et au moins un circuit de filtrage (15) situé essentiellement sur l'autre branche (43, 45).

12. Dispositif d'émetteur-récepteur (33) comprenant au moins une structure de montage (35), au moins un circuit émetteur (39) et au moins un circuit récepteur (37), dans lequel le dispositif d'émetteur-récepteur (33) comprend en outre au moins un module antenne (1) selon l'une des revendications 1 à 11, et dans lequel ledit au moins un élément de connexion émetteur (17) et le moins un élément de connexion récepteur (11) sont connectés électriquement au circuit émetteur (39) et au circuit récepteur (37), respectivement.

13. Dispositif d'émetteur-récepteur (33) selon la revendication 12, dans lequel ledit au moins un module antenne (1) est courbé autour de la structure de montage (35).

14. Dispositif d'émetteur-récepteur (33) selon les revendications 12 ou 13, dans lequel ledit au moins un module antenne (1) enveloppe au moins partiellement ladite au moins une structure de montage (35).

15. Dispositif d'émetteur-récepteur (33) selon l'une quelconque des revendications 12 à 14, dans lequel ladite au moins un la structure de montage (35) comprend au moins un élément de fixation (59) pour fixer au moins un élément de transmission (63, 73) sur ledit au moins un dispositif d'antenne (9).
